# EUROPÄISCHE PATENTSCHRIFT

(11) **EP 1 899 145 B1**
(45) Veröffentlichungstag und Bekanntmachung des Hinweises auf die Patenterteilung: **08.07.2009**
(21) Anmeldenummer: 06723951.7
(22) Anmeldetag: 01.04.2006
(51) Int. Cl.: B29C 65/78, B29D 30/42, B29C 53/42

(54) **VERFAHREN UND VORRICHTUNG EINSETZBAR IM AUTOMATISIERT ABLAUFENDEN AUFBAU EINES FAHRZEUGLUFTREIFENS**
METHOD AND DEVICE THAT CAN BE USED IN THE AUTOMATED CONSTRUCTION OF A VEHICLE TYRE
PROCEDE ET DISPOSITIF POUVANT ETRE UTILISES DANS LA CONSTRUCTION AUTOMATISEE D'UN PNEU DE VEHICULE A MOTEUR

(30) Priorität: 24.05.2005 DE 102005023925
(43) Veröffentlichungstag der Anmeldung: 19.03.2008
(73) Patentinhaber: Continental Aktiengesellschaft, D-30165 Hannover (DE)
(72) Erfinder: GROPPE, Markus, 402 13 Düsseldorf (DE); WINKLER, Jens, 30173 Hannover (DE)
(74) Vertreter: Finger, Karsten
(86) Internationale Anmeldenummer: PCT/EP2006/002991
(87) Internationale Veröffentlichungsnummer: WO 2006/125491

(56) Entgegenhaltungen:
- EP-A- 0 358 435
- EP-A- 0 417 991
- EP-A- 0 561 374
- EP-A- 1 358 999
- DE-A1- 2 359 131
- DE-A1- 10 036 010
- GB-A- 1 376 400
- US-A- 3 962 022
- PATENT ABSTRACTS OF JAPAN Bd. 2003, Nr. 12, 5. Dezember 2003 (2003-12-05) -& JP 2004 181950 A (BRIDGESTONE CORP), 2. Juli 2004 (2004-07-02)

## Beschreibung

Die Erfindung betrifft ein Verfahren und eine Vorrichtung einsetzbar im automatisiert ablaufenden Aufbau eines Fahrzeugluftreifens unter Verwendung von stumpf gespleißten Reifenbauteilen aus Materialbahnen, beispielsweise aus in eine Kautschukmischung eingebetteten textilen Corden oder Stahlcorden zur Herstellung einer Karkasseinlage des Fahrzeugluftreifens, wobei die Endabschnitte der abgelängten Materialbahn in einer Spleißeinrichtung mit vertikal zueinander bewegbaren Paaren von oberen und unteren Spleißelementen einklemmbar und durch ein aufeinander zu Bewegen der paarweise zusammen gehörenden Spleißelemente stumpf zusammenfügbar sind.

Spleißanlagen, welche ein stumpfes Spleißen der beiden Endabschnitte einer Materialbahn ermöglichen, beispielsweise zur Herstellung einer ringförmig vorgeformten Stahl- oder Textilcordkarkasse für PKW- oder LKW Reifen, sind aus der Patentliteratur in unterschiedlichen Ausführungsformen bekannt. Stahl- oder Textilcordkarkasseinlagen werden üblicher Weise aus Kautschuk beschichteten Cordbahnen hergestellt, in 500 mm bis 1500 mm breite Abschnitte zerlegt, deren Endabschnitte stumpf aneinander gefügt werden. In den dabei entstehenden geschlossenen Materialbahnen in der Breite von 500 mm bis 1500 mm sind die zuvor längs verlaufenden Corde meist quer angeordnet, bei sogenannten Winkelkarkassen auch unter einem von 90° abweichenden Winkel. In der Praxis üblich ist ein Zusammenfügen der Endabschnitte durch Überlappen direkt auf der Reifenaufbautrommel. Neben der Materialverschwendung hat eine Überlappung der Endabschnitte von Reifenbauteilen negative Auswirkungen auf Reifeneigenschaften im Normalbetrieb, insbesondere gehören zu den Folgen Unwucht und Ungleichförmigkeit der hergestellten Reifen. Eine Verbindung der Reifenbauteile durch einen stumpfen Spleiß vermeidet unerwünschte Materialanhäufungen und - dehnungen und ist somit mit einer Verbesserung der Reifengleichförmigkeit verbunden. Ein ringförmiges prozesssicheres Schließen des Reifenbauteils direkt auf der Reifenaufbautrommel hat sich aber als kaum durchführbar erwiesen, insbesondere auch bei Winkelkarkassen.

Aus der Patentliteratur sind Verfahren und Vorrichtungen bekannt, die sich mit der Durchführung des eigentlichen Spleißvorganges zum stumpfen Verbinden der Endabschnitte von Materialbahnen für Reifenbauteile befassen.

Ein Verfahren und eine Vorrichtung der eingangs genannten Art sind beispielsweise aus der EP 0 417 991 A2 bekannt. Die aus D1 bekannte zylindrische Reifenaufbautrommel weist ein- und ausfahrbare Segmente auf, auf welchen die zu spleißende Karkasseinlage positioniert und mittels einer Anzahl von Saugeinrichtungen gehalten wird. Die Endabschnitte der aufgebrachten Karkasseinlage liegen im Bereich eines Spaltes und sind demnach vorerst auch um dessen Breite voneinander beabstandet. Durch ein Zusammenwirken von Paaren von Spleißelementen und Trommelsegmentbewegungen wird der Spleißvorgang der Enden durchgeführt. Die Karkasseinlage verbleibt auch nach dem Spleißvorgang auf der Reifenaufbautrommel, in einem weiteren Verfahrensschritt werden die Wulstkerne gesetzt.

Aus der DE 23 59 131 A ist ferner eine Vorrichtung zum Verbinden der Ränder der Endabschnitte einer Materialbahn bekannt, bei der zwei Paare von gegeneinander bewegbaren Klemmbacken vorgesehen sind, die auf eine besondere Weise gleitbar bewegbar sind, um schonend eine feste Verbindung zwischen den Rändern der Endabschnitte herstellen zu können.

Die DE 101 56 472 A befasst sich mit einem Verfahren zum stumpfen Spleißen mit Hilfe einer Spleißeinrichtung, die oberhalb und unterhalb einer Spleißunterlage jeweils ein Backenpaar aufweist, wobei die Backen jedes Backenpaares horizontal zueinander und voneinander bewegbar sind und die Backenpaare insgesamt vertikal zueinander und voneinander bewegbar sind. Die Vertikalbewegung der Backenpaare erfolgt dabei unabhängig von der horizontalen Bewegung der einzelnen Backen, wodurch der Spleißvorgang schneller ablaufen kann.

In der Materialvorbereitung können bekannte Verfahren vergleichsweise einfach durchgeführt werden, da in der Ebene gearbeitet werden kann. Es ist jedoch erwünscht, Verfahren und Vorrichtungen zum stumpfen Spleißen von Reifenbauteilen auch in einem automatisiert ablaufenden Herstellungsprozess einzubinden, um die Reifenherstellung insgesamt automatisiert und rationell durchführen zu können.

Der Erfindung liegt die Aufgabe zu Grunde, ein Verfahren und eine Vorrichtung zur Verfügung zu stellen, welches bzw. welche einen automatisiert ablaufenden Herstellungsprozess unterstützt bzw. ermöglicht.

Was das Verfahren betrifft, wird die gestellte Aufgabe erfindungsgemäß dadurch gelöst, dass der eine Endabschnitt der abgelängten Materialbahn aus einer Servicereinrichtung kommend auf dem einen Spleißelement des einen Paares von Spleißelementen eben aufgelegt und fixiert wird,
dass anschließend ein dieses Paar von Spleißelementen tragendes Basisteil bei gleichzeitiger Zuführung der Materialbahn um 360° gedreht wird und der zweite Endabschnitt der frei hängenden ringartig geformten Materialbahn in einem geringen Abstand vom erstgenannten Endabschnitt und in der gleichen Ebene wie dieser am zweiten Spleißelement dieses Paares von Spleißelementen positioniert und fixiert wird,
wobei anschließend das zweite Paar von Spleißelementen vertikal zugeführt und auf den Endabschnitten positioniert und fixiert wird
und der stumpfe Spleiß unter horizontalem Zusammenfahren der Paare von oberen und unteren Spleißelementen durchgeführt wird.

Gemäß einer bevorzugten Ausführungsform des Verfahrens wird anschließend das Basisteil mitsamt seinem Paar von Spleißelementen aus der nun ringartig geschlossenen Materialbahn herausgefahren, wobei die Materialbahn am anderen Paar von Spleißelementen gehalten wird, eine Transfereinheit in die ringartig geschlossene Materialbahn eingefahren, welche die Materialbahn derart verformt, dass sie einen kreisförmigen Querschnitt annimmt, wobei die Materialbahn nachfolgend auf einer Transfervorrichtung zum Transport zu einer Reifenaufbautrommel positioniert wird.

Was die Vorrichtung betrifft, wird die gestellte Aufgabe erfindungsgemäß dadurch gelöst, dass die Spleißeinrichtung ein drehbares Basisteil aufweist, an welchem eines der Paare von Spleißelementen angeordnet ist, an welches die Endabschnitte der Materialbahn in einer Ebene fixierbar sind, wobei die Materialbahn während des Spleißvorganges lediglich von den Spleißelementen gehalten ist, und dass eine Transfereinheit zum Transport der fertig gespleißten ringartig geschlossenen Materialbahn einer Vielzahl von ringförmig angeordneten, langgestreckten Segmenten vorgesehen ist, welche zumindest in radialer Richtung bewegbar sind.

Das erfindungsgemäße Verfahren ermöglicht daher ein voll automatisches Ablaufen der einzelnen Schritte des Herstellen eines stumpfen Spleißes, beginnend mit dem Auflegen der Endabschnitte der zu spleißenden Materialbahn und endend mit der Übergabe des fertig gespleißten Reifenbauteils auf die Transfereinrichtung zur Reifenaufbautrommel. Das erfindungsgemäße Verfahren und die erfindungsgemäße Vorrichtung eignen sich auch sehr gut zum Spleißen von Materialbahnen zur Herstellung von sogenannten Winkelkarkassen.

Die Vorrichtung gestattet ein automatisch ablaufendes Auflegen der Endabschnitte der Materialbahn auf einem der Paare von Spleißelementen.

Es ist wichtig, dass die Endabschnitte der Materialbahn an den Spleißelementen gut halten. Dies kann durch entsprechende Saugeinrichtungen (Vakuumsauger) sichergestellt werden, bei Materialbahnen, die Stahlcorde beinhalten, kann auch vorgesehen werden, die Endabschnitte elektromagnetisch zu halten.

Die Transfereinheit, mittels welcher die gespleißte Materialbahn derart verformt wird, dass sie einen kreisförmigen Querschnitt annimmt, weist Segmente auf, die derart verfahrbar sind, dass an der Innenseite der Materialbahn eine Verformung derselben in einen kreisförmigen Querschnitt erfolgt. Die Segmente der erfindungsgemäßen Transfereinheit sind daher zumindest in radialer Richtung bewegbar. Bevorzugt sind die Segmente mittels Linearantriebe in einer Ebene normal zu ihrer Längserstreckung beliebig bewegbar.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1a, 1b und 1c anhand von schematischen Ansichten die Ausführung und die Funktionsweise von Klemmleisten zur Herstellung eines stumpfen Spleißes und
Fig. 2 bis Fig. 10 einzelne Verfahrensschritte der Handhabung einer abgelängten Materialbahn, die stumpf gespleißt wird und anschließend zu einer Reifenaufbautrommel transportiert wird.

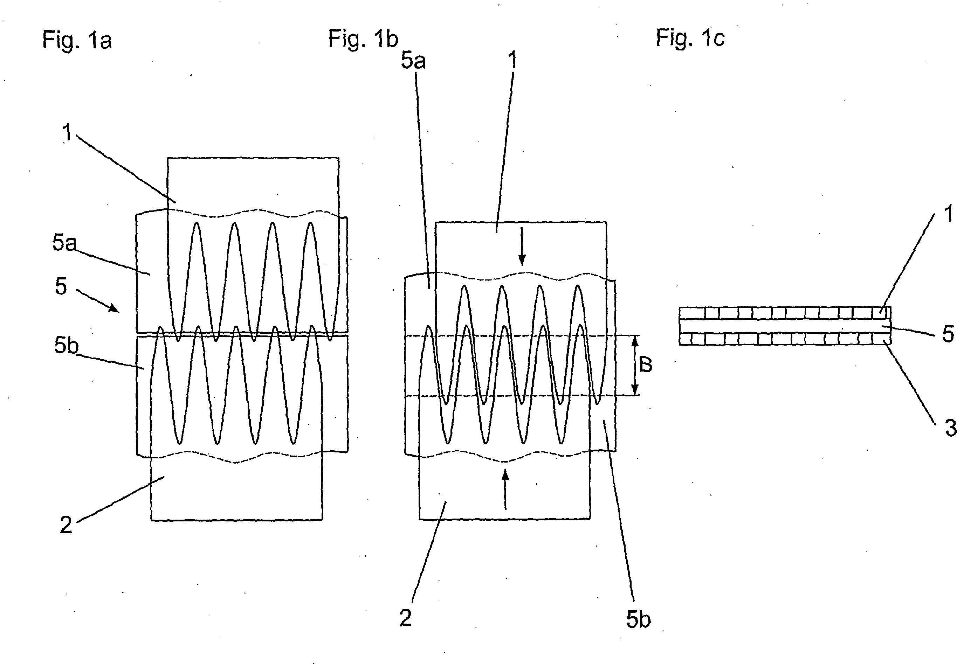

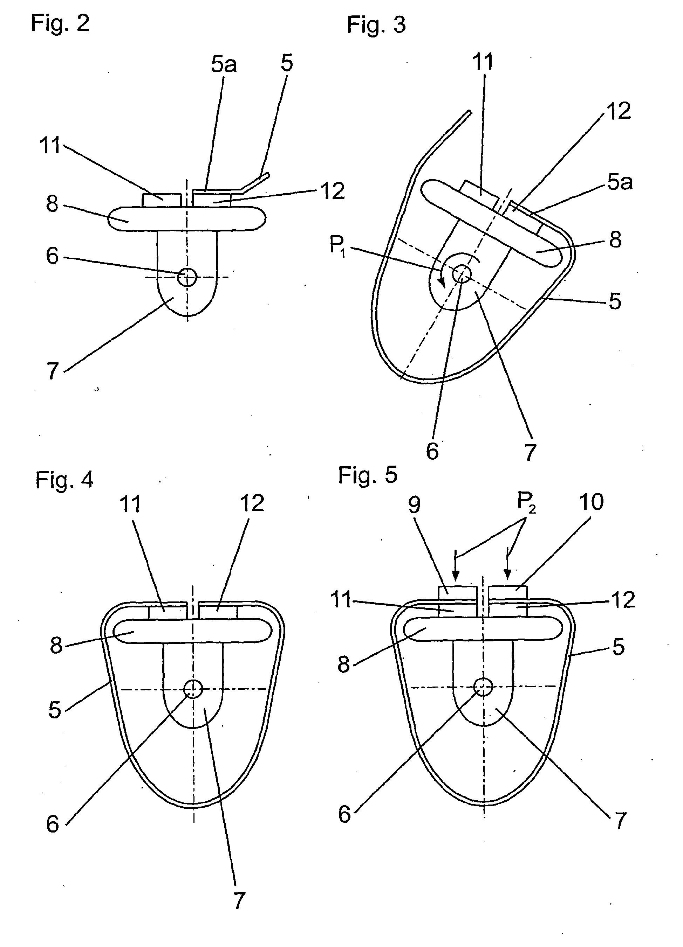

Fig. 1a und Fig. 1b zeigen in Draufsicht die beiden Endabschnitte 5a, 5b einer bereits abgelängten Materialbahn 5, die beispielsweise aus Kautschuk beschichteten Textil- oder Stahlcorden besteht und zur Herstellung einer Fig. 2 bis Fig. 10 einzelne Verfahrensschritte der Handhabung einer abgelängten Materialbahn, die stumpf gespleißt wird und anschließend zu einer Reifenaufbautrommel transportiert wird.

Fig. 1a und Fig. 1b zeigen in Draufsicht die beiden Endabschnitte 5a, 5b einer bereits abgelängten Materialbahn 5, die beispielsweise aus Kautschuk beschichteten Textil- oder Stahlcorden besteht und zur Herstellung einer Karkasseinlage eines Fahrzeugluftreifens vorgesehen ist. Die Endabschnitte 5a, 5b werden in der Ebene stumpf zusammengefügt, sodass die Materialbahn 5 in eine Ringform gebracht wird. Fig. 1a zeigt die gegenseitige Lage der Stirnseiten der Endabschnitte 5a, 5b unmittelbar vor dem Spleißvorgang, welcher mittels zweier Paare von verzahnten Klemmleisten 1, 2 und 3, 4 durchgeführt wird, die Bestandteile von Spleißelementen sind. Das Klemmleistenpaar 1, 2 erfasst die bzw. liegt an der Oberseite der Endabschnitte 5a, 5b, das Klemmleistenpaar 3, 4 kommt mit der Unterseite der Endabschnitte 5a, 5b in Kontakt. Das in Fig.1a und 1b gezeigte Klemmleistenpaar kann wahlweise das Paar 1, 2 oder das Paar 3, 4 sein. Die einander zugewandten Endabschnitte jedes Paares von Klemmleisten 1, 2 und 3, 4 sind mit einer ausgeprägten Verzahnung versehen, wobei, wie Fig. 1a zeigt, die gegenseitige Anordnung der Zähne derart getroffen ist, dass die beiden oberen Klemmleisten 1, 2 und gleichermaßen die beiden unteren Klemmleisten 3, 4 unter gegenseitigem Eingriff der Zähne geringfügig ineinander geschoben werden können. Fig. 1b zeigt eines der Klemmleistenpaare 1, 2 bzw. 3, 4 in der ineinander geschobenen Lage, das andere Klemmleistenpaar ist gleichzeitig gleichermaßen zusammengeschoben. Durch das Zusammenfahren der oberen Klemmleisten 1, 2 und der beiden unteren Klemmleisten 3, 4 werden die stirnseitigen Schnittflächen der beiden Endabschnitte 5a, 5b der Materialbahn 5 fest gegeneinander gedrückt. Die verzahnten Klemmleisten 1, 2 und 3, 4 gewährleisten in der Ebene ein gut haltbares stumpfes Spleißen der Endabschnitte einer Materialbahn.

Die in Fig. 2 bis 7 gezeigte Vorrichtung ist mit einer Spleißeinrichtung versehen, mittels welcher die Endabschnitte 5a, 5b einer Materialbahn 5 in der Ebene stumpf gespleißt werden, vorzugsweise unter Verwendung von Spleißelementen mit verzahnten Klemmleisten, wie oben beschrieben. Zentraler Bestandteil der Vorrichtung ist das in den Fig. 2 bis Fig. 7 gezeigte Basisteil 7, welches an einer Drehachse 6 drehbar gelagert. Auf dem Basisteil 7 befindet sich ein Spleißtisch 8, welcher Bestandteil der Spleißeinrichtung ist, welche ein Paar von oberen Spleißelementen 9, 10 und ein Paar von unteren Spleißelementen 11, 12 aufweist, wobei die Spleißelemente 9, 10 und die Spleißelemente und 11, 12 aufeinander zu und voneinander weg bewegbar sind.

Fig. 2 zeigt die Ausgangsposition der Vorrichtung, in welcher auf dem in dieser Zeichnungsfigur rechten unteren Spleißelement 12 bereits der eine Endabschnitt 5a der zu spleißenden abgelängten Materialbahn 5 aufgelegt ist, welche mittels einer Servicereinrichtung, beispielsweise eines Transportbandes, zugeführt wird. Der Endabschnitt 5a wird am Spleißelement 12 festgehalten, beispielsweise durch Ansaugen unter Verwendung von nicht gezeigten Vakuumsaugern. Bei Spleißeinrichtungen, die mit Stahlcorden versehene Materialbahnen spleißen, kann das Festhalten an den Spleißelementen auch elektromagnetisch erfolgen.

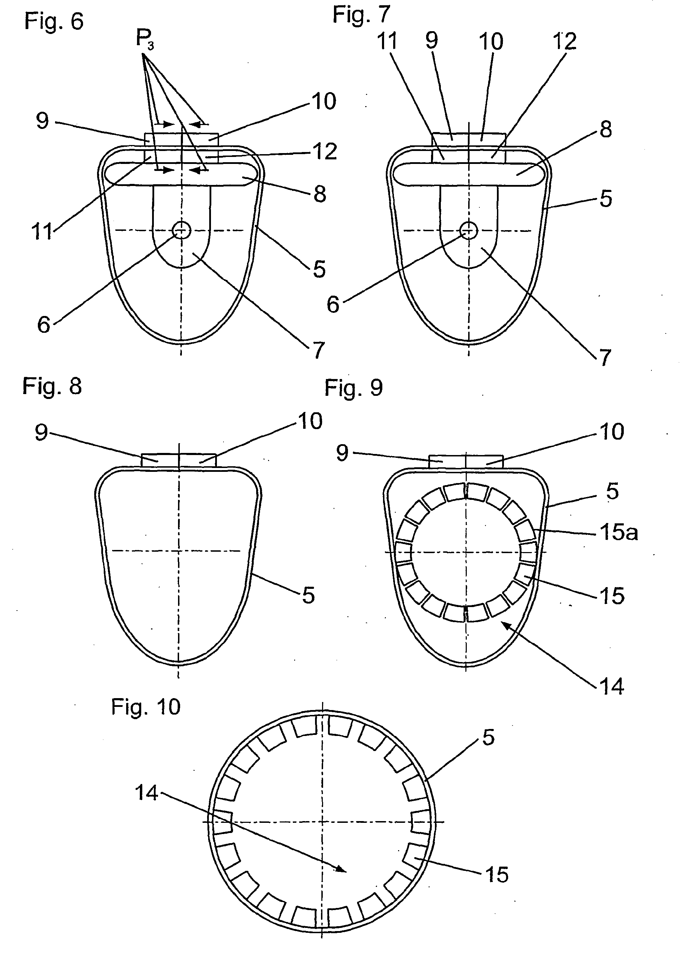

Bei aufgelegtem und gehaltenem Endabschnitt 5a wird das Basisteil 7 derart in Drehung versetzt (siehe Pfeil P₁ in Fig. 3), dass die kontinuierlich zugeführte Materialbahn 5 um das Basisteil 7 herum geführt wird bis ihr zweiter Endabschnitt 5b auf dem anderen unteren Spleißelement 11 aufgelegt und, beispielsweise ebenfalls mittels Vakuumsaugern, fixiert wird. Fig. 3 und 4 zeigen diese Verfahrensschritte, in Fig. 4 sind die beiden Endabschnitte 5a, 5b der Materialbahn 5 aufgelegt und fixiert. Im nächsten Schritt werden von oben her (durch Bewegen in in senkrechter Richtung) die beiden oberen Spleißelemente 9, 10 auf den Endabschnitten 5a, 5b der Materialbahn 5 positioniert (siehe Pfeil P₂ in Fig. 3), und die Spleißelemente 9, 10 mit 11, 12 gegeneinander gedrückt, sodass die beiden Endabschnitte 5a, 5b zwischen den Spleißelementen 9, 10, 11, 12 sicher gehalten sind (siehe Fig. 5). Im nächsten Verfahrensschritt erfolgt der eigentliche Spleißvorgang, indem die oberen und die unteren Spleißelemente 9, 10 und 11, 12 gleichzeitig (durch Bewegen in horizontaler Richtung) auseinander zugefahren werden (siehe Pfeil P₃ in Fig. 6) und die Stirnflächen der Endabschnitte 5a, 5b der Materialbahn 5 aufeinander gepresst werden, wobei die nicht dargestellten Verzahnungen von auf den Spleißelementen 9, 10, 11, 12 befindlichen Klemmleisten, wie oben beschrieben, ineinander greifen. Die Endabschnitte 5a, 5b der gespleißten Materialbahn 5 werden anschließend an den oberen Spleißelementen 9, 10, beispielsweise über Vakuumsauger, fixiert, die unteren Spleißelemente 11, 12 werden gelöst und gemeinsam mit dem Basisteil 7 aus der gespleißten Materialbahn 5 heraus gefahren. Fig. 8 zeigt die an den oberen Spleißelementen 9, 10 aufgehängte ringförmig geschlossene Materialbahn 5, die durch ihr Eigengewicht einen von der Kreisform abweichenden, länglichen Querschnitt aufweist. Im nächsten Schritt wird eine Transfereinheit 14 in das Innere der Materialbahn 5 eingefahren (siehe Fig. 9). Die Transfereinheit 14 weist eine Vielzahl von langgestreckten Segmenten 15 auf, die sich über die Tiefe der ringförmigen Materialbahn erstrecken. Die Segmente 15 sind mittels geeigneter Antriebe, beispielsweise Linearantriebe, in einer Ebene quer zu ihrer Längserstreckung bewegbar, sodass sie an die Innenseite der ringförmigen Materialbahn 5 herangefahren werden können, bis ihre Außenseiten 15a mit dieser in Kontakt treten. Bei eingefahrener Transfereinheit 14 werden die oberen Spleißelemente 9, 10 von der Materialbahn 5 gelöst und weggefahren.

Die Segmente 15 der Transfereinheit 14 werden nun derart verfahren, dass und bis die im Querschnitt längliche Materialbahn 5 in eine Querschnittsform mit kreisrundem Querschnitt gebracht wird. Fig. 10 zeigt diese Lage, die Außenflächen der Segmente 15 liegen an der im Querschnitt nun kreisförmigen Innenseite der Materialbahn 5 an. Jetzt kann die Materialbahn 5 an eine der üblichen Transfereinrichtungen übergeben, zur Reifenaufbautrommel transportiert und als Reifenbauteil im entsprechenden Verfahrensschritt positioniert werden.

Sämtliche Verfahrensabläufe werden automatisiert durchgeführt, es ist eine entsprechend programmierte Steuerung der gesamten Anlage mit allen zusammenwirkenden Komponenten vorgesehen.

Die Vorrichtung kann auch derart ausgeführt sein, dass die Endabschnitte der zu spleißenden Materialbahn zuerst auf den oberen Spleißelementen positioniert werden. Es wird ferner darauf verwiesen, dass ein stumpfer Spleiß der Endabschnitte einer Materialbahn bei der erfindungsgemäßen Vorrichtung auch auf andere Weise als in Fig. 1a bis 1c gezeigt durchgeführt werden kann.

Bei einer alternativen Ausführung der Transfereinheit 14 kann diese grundsätzlich kreisringförmig angeordnete Segmente aufweisen, die lediglich in radialer Richtung bewegbar sind.

## Patentansprüche

1. Verfahren einsetzbar im automatisiert ablaufenden Aufbau eines Fahrzeugluftreifens unter Verwendung von stumpf gespleißten Reifenbauteilen aus Materialbahnen (5), beispielsweise aus in eine Kautschukmischung eingebetteten textilen Corden oder Stahlcorden zur Herstellung einer Karkasseinlage des Fahrzeugluftreifens, wobei die Endabschnitte (5a, 5b) der abgelängten Materialbahn (5) in einer Spleißeinrichtung mit vertikal zueinander bewegbaren Paaren von oberen und unteren Spleißelementen (9, 10, 11, 12) einklemmbar und durch ein aufeinander zu Bewegen der paarweise zusammen gehörenden Spleißelemente (9, 10, 11, 12) stumpf zusammenfügbar sind, wobei
der eine Endabschnitt (5a) der abgelängten Materialbahn (5) aus einer Servicereinrichtung kommend auf dem einen Spleißelement (12) des einen Paares von Spleißelementen (9, 10; 11, 12) eben aufgelegt und fixiert wird,
anschließend ein dieses Paar von Spleißelementen (11, 12) tragendes Basisteil (7) bei gleichzeitiger Zuführung der Materialbahn (5) um 360° gedreht wird und bis der zweite Endabschnitt (5b) der frei hängender, ringartig geformter Materialbahn (5) in einem geringen Abstand vom erstgenannten Endabschnitt (5a) und in der gleichen Ebene wie dieser am zweiten Spleißelement (11) dieses Paares von Spleißelementen (11, 12) positioniert und fixiert wird,
wobei anschließend das zweite Paar von Spleißelementen (9, 10) vertikal zugeführt und auf den Endabschnitten (5a, 5b) positioniert und fixiert wird
und der stumpfe Spleiß unter horizontalem Zusammenfahren der Paare von oberen und unteren Spleißelementen (9, 10, 11, 12) durchgeführt wird.

2. Verfahren nach Anspruch 1, **dadurch gekennzeichnet, dass** nach dem Spleißvorgang das Basisteil (7) mitsamt seinem Paar von Spleißelementen (11, 12) aus der nun ringartig geschlossenen Materialbahn (5) herausgefahren wird, wobei die Materialbahn (5) an dem anderem Paar von Spleißelementen (9, 10) gehalten wird,
eine Transfereinheit (14) in die ringartig geschlossene Materialbahn (5) eingefahren wird,
welche die Materialbahn (5) derart verformt, dass sie einen kreisförmigen Querschnitt annimmt und welche diese nachfolgend auf einer Transfervorrichtung zum Transport zu einer Reifenaufbautrommel positioniert.

3. Verfahren nach Anspruch 1 oder 2, **dadurch gekennzeichnet, dass** die Endabschnitte (5a, 5b) der Materialbahn (5) mittels Saugeinrichtungen an den Spleißelementen (9, 10; 11, 12) gehalten werden.

4. Verfahren nach Anspruch 1 oder 2, **dadurch gekennzeichnet, dass** die Endabschnitte (5a, 5b) einer Stahlcorde aufweisenden Materialbahn (5) an den Spleißelementen (9, 10; 11, 12) elektromagnetisch gehalten werden.

5. Verfahren nach einem der Ansprüche 1 bis 4, **dadurch gekennzeichnet, dass** die gespleißte, im Querschnitt längliche Materialbahn (5) mittels entsprechend verfahrbarer Segmente (15) der Transfereinheit (14) einen kreisförmigen Querschnitt erhält.

6. Vorrichtung einsetzbar im automatisiert ablaufenden Aufbau eines Fahrzeugluftreifens unter Verwendung von stumpf gespleißten Reifenbauteilen aus Materialbahnen (5), beispielsweise aus in eine Kautschukmischung eingebetteten textilen Corden oder Stahlcorden zur Herstellung einer Karkasseinlage des Fahrzeugluftreifens, wobei die Endabschnitte (5a, 5b) der abgelängten Materialbahn (5) in einer Spleißeinrichtung mit vertikal zueinander bewegbaren Paaren von oberen und unteren Spleißelementen (9, 10, 11, 12) einklemmbar und durch ein aufeinander zu Bewegen der paarweise zusammen gehörenden Spleißelemente (9, 10, 11, 12) stumpf zusammenfügbar sind,
**dadurch gekennzeichnet,**
**dass** die Spleißeinrichtung ein drehbares Basisteil (6) aufweist, an welchem eines der Paare von Spleißelementen (11, 12) angeordnet ist, an welches die Endabschnitte (19a, 10b) der Materialbahn (5) in einer Ebene fixierbar sind, wobei die Materialbahn (5) während des Spleißvorganges lediglich von den Spleißelementen (9, 10, 11, 12) gehalten ist, und dass eine Transfereinheit (14) zum Transport der fertig gespleißten ringartig geschlossenen Materialbahn (5) einer Vielzahl von ringförmig angeordneten, langgestreckten Segmenten (15) vorgesehen ist, welche zumindest in radialer Richtung bewegbar sind.

7. Vorrichtung nach Anspruch 6, **dadurch gekennzeichnet, dass** die Segmente (15) mittels Linearantriebe in einer Ebene normal zu ihrer Längserstreckung beliebig bewegbar sind.

## Claims

1. Method that can be used in the automated construction of a pneumatic vehicle tyre, using butt spliced tyre components consisting of material webs (5), for example textile cords or steel cords that are embedded in a rubber mixture, to produce a carcass insert of the vehicle tyre, it being possible for the end sections (5a, 5b) of the cut-to-length material web (5) to be clamped in a splicing device comprising pairs of upper and lower splicing elements (9, 10, 11, 12) that can be moved vertically in relation to one another and for said sections to be joined together with a spliced joint by moving the splicing elements (9, 10, 11, 12) belonging together in pairs towards one another, one end section (5a) of the cut-to-length material web (5) coming from a servicer device being laid and fixed in an even manner on a splicing element (12) of one pair of splicing elements (9, 10; 11, 12),
a base part (7) that supports this pair of splicing elements (11, 12) subsequently being rotated through 360°, while the material web (5) is simultaneously supplied, until the second end section (5b) of the freely suspended, annularly formed material web (5) is positioned and fixed at a small distance from the first-mentioned end section (5a) and in the same plane as the latter on the second splicing element (11) of this pair of splicing elements (11, 12),
subsequently, the second pair of splicing elements (9, 10) being vertically moved into place and positioned and fixed on the end sections (5a, 5b)
and the butt splice is carried out by moving the pairs of upper and lower splicing elements (9, 10, 11, 12) horizontally together.

2. Method according to Claim 1, **characterized in that**, after the splicing operation, the base part (7) together with its pair of splicing elements (11, 12) is moved out from the then annularly closed material web (5), the material web (5) being held on the other pair of splicing elements (9, 10),
a transfer unit (14) is moved into the annularly closed material web (5),
deforms the material web (5) in such a way that it assumes a circular cross section and subsequently positions the latter on a transfer device for transporting to a tyre building drum.

3. Method according to Claim 1 or 2, **characterized in that** the end sections (5a, 5b) of the material web (5) are held on the splicing elements (9, 10; 11, 12) by means of suction devices.

4. Method according to Claim 1 or 2, **characterized in that** the end sections (5a, 5b) of a material web (5) having steel cords are held on the splicing elements (9, 10; 11, 12) electromagnetically.

5. Method according to one of Claims 1 to 4, **characterized in that** the spliced, cross-sectionally elongate material web (5) is given a circular cross section by means of correspondingly movable segments (15) of the transfer unit (14).

6. Apparatus that can be used in the automated construction of a pneumatic vehicle tyre, using butt spliced tyre components consisting of material webs (5), for example textile cords or steel cords that are embedded in a rubber mixture, to produce a carcass insert of the vehicle tyre, it being possible for the end sections (5a, 5b) of the cut-to-length material web (5) to be clamped in a splicing device comprising pairs of upper and lower splicing elements (9, 10, 11, 12) that can be moved vertically in relation to one another and for said sections to be joined together with a spliced joint by moving the splicing elements (9, 10, 11, 12) belonging together in pairs towards each other, **characterized in that** the splicing device has a rotatable base part (6), on which one of the pairs of splicing elements (11, 12) is arranged to which the end sections (19a, 10b) of the material web (5) can be fixed in a plane, the material web (5) merely being held by the splicing elements (9, 10, 11, 12) during the splicing operation, and **in that** a transfer unit (14) for transporting the finished spliced, annularly closed material web (5) is provided, with a multiplicity of annularly arranged, elongated segments (15), which are movable at least in a radial direction.

7. Transfer unit according to Claim 6, **characterized in that** the segments (15) can be moved as desired in a plane normal to their longitudinal extent by means of linear drives.

## Revendications

1. Procédé utilisable dans la construction automatisée d'un bandage pneumatique pour roue de véhicule par recours à des composants de bandage ligaturés bout à bout et constitués de bandes (5) de matière, par exemple de câbles textiles ou de câbles d'acier incorporés dans un mélange de caoutchouc, pour fabriquer une garniture de carcasse d'un bandage pneumatique pour roue de véhicule,
les parties d'extrémité (5a, 5b) de la bande de matière (5) découpée à longueur pouvant être serrées dans un dispositif de ligature qui présente des paires constituées d'éléments supérieurs et d'éléments inférieurs de ligature (9, 10, 11, 12), ces paires pouvant se déplacer verticalement l'une par rapport à l'autre, les parties d'extrémité pouvant être assemblées bout à bout en déplaçant l'un au-dessus de l'autre des éléments de ligature (9, 10, 11, 12) qui font partie de la même paire,
l'une des parties d'extrémité (5a) de la bande de matière (5) découpée à longueur provenant d'un dispositif de service étant placée à plat et fixée sur l'un des éléments de ligature (12) d'une des paires d'éléments de ligature (9, 10; 11, 12),
une pièce de base (7) qui porte une de ces paires d'éléments de ligature (11, 12) étant ensuite tournée de 360° pendant que la bande de matière (5) est amenée, jusqu'à ce que la deuxième partie d'extrémité (5b) de la bande de matière (5) suspendue librement et en forme d'anneau soit positionnée et fixée à petite distance de ladite première partie d'extrémité (5a) et dans le même plan que celle-ci sur le deuxième élément de ligature (11) de cette paire d'éléments de ligature (11, 12),
la deuxième paire d'éléments de ligature (9, 10) étant ensuite amenée verticalement, positionnée et fixée sur les parties d'extrémité (5a, 5b),
la ligature bout à bout étant alors réalisée en approchant horizontalement les paires d'éléments supérieurs et d'éléments inférieurs de ligature (9, 10, 11, 12).

2. Procédé selon la revendication 1, **caractérisé en ce qu'**après l'opération de ligature, la pièce de base (7) est extraite en même temps que sa paire d'éléments de ligature (11, 12) hors de la bande de matière (5) qui forme maintenant un anneau fermé, la bande de matière (5) étant maintenue sur l'autre paire d'éléments de ligature (9, 10),
une unité de transfert (14) étant insérée dans la bande de matière (5) en anneau fermé et déformant la bande de matière (5) de telle sorte qu'elle prenne une section transversale circulaire avant d'être positionnée sur un dispositif de transfert qui la transporte vers un tambour de montage de bandage.

3. Procédé selon les revendications 1 ou 2, **caractérisé en ce que** les parties d'extrémité (5a, 5b) de la bande de matière (5) sont maintenues sur les éléments de ligature (9, 10; 11, 12) au moyen de dispositifs aspirants.

4. Procédé selon les revendications 1 ou 2, **caractérisé en ce que** les parties d'extrémité (5a, 5b) d'une bande de matière (5) qui présente des câbles d'acier sont maintenues électromagnétiquement sur les éléments de ligature (9, 10; 11, 12).

5. Procédé selon l'une des revendications 1 à 4, **caractérisé en ce que** la bande de matière (5) de section transversale allongée et ligaturée reçoit une section transversale de forme circulaire au moyen de segments (15) de l'unité de transfert (14) qui peuvent être déployés de manière appropriée.

6. Dispositif utilisable dans le montage automatisé d'un bandage pneumatique pour roue de véhicule par recours à des composants de bandage constitués de bandes de matière (5) ligaturées bout à bout, par exemple de câbles textiles ou de câbles d'acier incorporés dans un mélange de caoutchouc, pour la fabrication d'une garniture de carcasse du bandage pneumatique pour roue de véhicule,
les parties d'extrémité (5a, 5b) de la bande de matière (5) découpée à longueur pouvant être serrées dans un dispositif de ligature qui présente des paires constituées d'éléments supérieurs et d'éléments inférieurs de ligature (9, 10, 11, 12), ces paires pouvant se déplacer verticalement l'une par rapport à l'autre, les parties d'extrémité pouvant être assemblées bout à bout en déplaçant l'un au-dessus de l'autre des éléments de ligature (9, 10, 11, 12) qui font partie de la même paire,
**caractérisé en ce que**
le dispositif de ligature présente une pièce rotative de base (6) sur laquelle est disposée la paire d'éléments de ligature (11, 12) sur laquelle les parties d'extrémité (19a, 10b) de la bande de matière (5) peuvent être fixées dans un plan,
la bande de matière (5) étant maintenue uniquement par les éléments de ligature (9, 10, 11, 12) pendant l'opération de ligature, et
**en ce qu'**une unité de transfert (14) qui transporte la bande de matière (5) terminée et ligaturée, en forme d'anneau fermé, est dotée de plusieurs segments allongés (15) disposés en anneau qui peuvent être déplacés au moins dans la direction radiale.

7. Dispositif selon la revendication 6, **caractérisé en ce que** les segments (15) peuvent être déplacés de manière quelconque dans un plan perpendiculaire à leur extension longitudinale au moyen d'entraînements linéaires.
